(19) Europäisches Patentamt
European Patent Office
Office européen des brevets

(11) **EP 2 363 939 B1**

(12) **FASCICULE DE BREVET EUROPEEN**

(45) Date de publication et mention
de la délivrance du brevet:
**29.07.2015 Bulletin 2015/31**

(51) Int Cl.:
***H02J 9/06*** *(2006.01)* ***G06F 1/30*** *(2006.01)*

(21) Numéro de dépôt: **11305221.1**

(22) Date de dépôt: **01.03.2011**

(54) **Ensemble électrique et procédé d'alimentation sans interruption en courant alternatif d'une installation**

Unterbrechungsfreie Wechselstromversorgung einer Installation und Verfahren dazu

AC uninterruptible power supply for an installation and method therefor

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **02.03.2010 FR 1051512**

(43) Date de publication de la demande:
**07.09.2011 Bulletin 2011/36**

(73) Titulaire: **Bull S.A.S.**
**78340 Les Clayes-sous-Bois (FR)**

(72) Inventeurs:
 • **Lecourtier, Georges**
 **78000 Versailles (FR)**
 • **Cargemel, Laurent**
 **78640 Neauphle Le Chateau (FR)**

(74) Mandataire: **Bonnet, Michel**
**Cabinet Bonnet**
**93, rue Réaumur - Boîte 10**
**75002 Paris (FR)**

(56) Documents cités:
EP-A2- 0 402 833    DE-A1- 3 704 426
DE-A1- 10 244 608    US-A- 4 673 826
US-A- 5 612 580    US-A1- 2001 022 472
US-A1- 2005 029 984    US-A1- 2005 036 253
US-A1- 2006 192 433    US-A1- 2007 152 506
US-A1- 2007 200 432    US-A1- 2010 009 724

Il est rappelé que: Dans un délai de neuf mois à compter de la publication de la mention de la délivrance du brevet européen au Bulletin européen des brevets, toute personne peut faire opposition à ce brevet auprès de l'Office européen des brevets, conformément au règlement d'exécution. L'opposition n'est réputée formée qu'après le paiement de la taxe d'opposition. (Art. 99(1) Convention sur le brevet européen).

**Description**

La présente invention concerne un dispositif d'alimentation sans interruption en courant alternatif d'une installation consommatrice d'électricité. Elle concerne également un ensemble électrique incluant un tel dispositif et l'installation qu'il alimente en courant alternatif, ainsi qu'un procédé d'alimentation sans interruption en courant alternatif.

Plus précisément, l'invention concerne un dispositif d'alimentation raccordable à un port d'alimentation électrique d'une installation, laquelle comporte en outre au moins un système électrique relié au port d'alimentation.

Par exemple, elle peut s'appliquer à l'alimentation d'une installation de type centre de calcul incluant un système de traitement d'information, comportant au moins un calculateur, devant être alimenté en courant continu à très basse tension.

On entend par « très basse tension », une tension généralement qualifiée de « tension de sécurité » qui permet à un opérateur de manipuler sans danger tout composant électrique sous cette tension. Une telle tension est en outre généralement adaptée aux composants électroniques d'un système de traitement d'information. Plusieurs domaines sont définis légalement en France et en Europe (TBT, TBTS, TBTP, TBTF) mais placent tous les très basses tensions sous le seuil de 120 V en courant continu et sous le seuil de 50 V en courant alternatif.

La tension d'un courant alternatif distribué par un réseau de distribution d'électricité est en général de l'ordre de 220/230 V ce qui représente donc a priori un danger pour un opérateur. En revanche, il est généralement considéré qu'une tension de 50 V ou moins ne représente pas de danger à la manipulation. Ainsi, dans les applications de télécommunication, les systèmes de traitement des données de transmission sont généralement soumis à une tension d'environ 48 V. En aviation, les composants embarqués sont généralement soumis à une tension continue d'environ 28 V. Enfin, un système de traitement d'information de type calculateur est généralement soumis à une tension continue d'environ 12 V.

Un système de traitement d'information est par exemple un ensemble de serveurs informatiques interconnectés en réseau local, formant ainsi un calculateur à haute performance, généralement qualifié de calculateur HPC (de l'Anglais « High Performance Computing »). Dans ce cas comme dans d'autres applications sensibles (serveur informatique, micro-ordinateur fixe ou portable, station radiofréquence de télécommunication, etc.), il est important que le fonctionnement du système électrique ne soit pas perturbé par des défaillances dans l'alimentation en courant, notamment par des micro-coupures du réseau d'alimentation en courant alternatif. En effet, de telles défaillances, même lorsqu'elles ne durent que quelques centaines de millisecondes, peuvent engendrer des erreurs de calcul, des pertes de données ou des dysfonctionnements très pénalisants du calculateur HPC.

A titre d'exemple, les micro-coupures sont assez fréquentes, le gestionnaire du réseau d'alimentation en courant alternatif pouvant avoir besoin ponctuellement de délester des parties du réseau. Elles ont en général une durée équivalente à quelques périodes du courant alternatif : pour un courant alternatif de 50 Hertz, une micro-coupure de dix à douze périodes dure ainsi entre 200 et 250 millisecondes. En outre, le redémarrage d'un dispositif de conversion d'un courant alternatif en courant continu suite à une micro-coupure peut prendre lui aussi 100 à 200 millisecondes, ce qui donne une micro-coupure, vue du système électrique consommateur de courant continu, pouvant durer jusqu'à 450 millisecondes.

Les installations comportant un système électrique, par exemple un système de traitement d'information, de type sensible aux micro-coupures du réseau, prévoient généralement un dispositif d'alimentation sans interruption qui permet de fournir une alimentation électrique stable et dépourvue de micro-coupures, quoi qu'il se produise sur le réseau d'alimentation en courant alternatif. Cette alimentation sans interruption est généralement reliée directement au réseau d'alimentation en courant alternatif et comporte de ce fait un redresseur pour une conversion du courant alternatif en courant continu (fonction de convertisseur AC/DC). Elle est en outre munie d'un dispositif de stockage d'énergie, tel qu'une batterie d'accumulateurs ou un ensemble de supercondensateurs, et d'un onduleur pour convertir le courant continu généré par le dispositif de stockage d'énergie en un courant alternatif (fonction de convertisseur DC/AC). Intercalée entre le réseau d'alimentation en courant alternatif et un port d'alimentation électrique de l'installation, elle vient donc se substituer au réseau d'alimentation pour fournir de l'énergie électrique au système électrique lors de micro-coupures ou de défaillances plus lourdes du réseau.

Un tel dispositif d'alimentation sans interruption est par exemple décrit dans l'article de Sukumara et al, intitulé « Fuel cell based uninterrupted power sources », publié dans 1997 International Conference on Power Electronics and Drive Systems Proceedings, vol. 2, pages 728-733, 26-29 mai 1997. Ce dispositif vient se placer en coupure entre le réseau d'alimentation en courant alternatif et le port d'alimentation de l'installation.

Ainsi, lorsque ce dispositif est utilisé pour l'alimentation en courant continu à très basse tension de systèmes de traitement d'information d'une installation, le courant alternatif fourni par le réseau d'alimentation traverse le dispositif d'alimentation sans interruption avant d'alimenter l'installation. Par conséquent, il est tout d'abord redressé pour une éventuelle charge de batteries d'accumulation du dispositif d'alimentation sans interruption puis ondulé en sortie du dispositif d'alimentation sans interruption. Enfin, il est redressé de nouveau à l'intérieur de l'installation. Sachant que chaque conversion AC/DC ou DC/AC présente en général un rendement de 95%, un tel montage en cascade de convertisseurs présente un rendement d'environ 85%.

Une solution connue pour réduire cette dégradation du rendement consiste à remplacer le dispositif d'alimentation sans interruption à double conversion précité par un dispositif d'alimentation sans interruption à simple conversion AC/DC. L'installation est alors directement alimentée en courant continu et une double conversion DC/AC puis AC/DC est ainsi évitée. On peut alors espérer améliorer le rendement d'environ 10%.

Cependant cette solution n'est pas totalement satisfaisante parce que toute installation nécessitant de prévoir au moins un disjoncteur, en amont de son port d'alimentation et/ou de ses systèmes électriques, il faut alors prévoir des disjoncteurs fonctionnant en courant continu. A l'interruption de courant engendrée par un disjoncteur en cas de problème, un arc se crée. En courant continu, il est bien plus difficile de faire disparaître cet arc qu'en courant alternatif : à 50 Hz, un arc disparaît au pire au bout de 20 ms, alors que le même arc électrique n'a aucune raison de disparaître en courant continu tant que le disjoncteur n'a pas brûlé. Par conséquent, il est nécessaire de prévoir des disjoncteurs spécifiques à technologie plus complexe, qui sont alors plus encombrants, plus chers et difficiles à trouver dans le commerce.

Il peut donc être souhaité de prévoir un dispositif d'alimentation sans interruption d'une installation consommatrice d'électricité qui résolve au moins une partie des problèmes et contraintes précités.

L'invention a ainsi pour objet un dispositif d'alimentation sans interruption en courant alternatif d'un port d'alimentation électrique d'une installation comportant au moins un système électrique relié au port d'alimentation, le dispositif d'alimentation sans interruption comportant :

- un premier circuit de raccordement électrique du port d'alimentation de l'installation à un réseau d'alimentation en courant alternatif,
- un dispositif de secours, comportant un redresseur, des moyens de charge, de stockage et de décharge d'énergie électrique et un onduleur, raccordable au port d'alimentation de l'installation,

caractérisé en ce que le dispositif de secours est disposé dans un second circuit d'alimentation en courant alternatif raccordable au port d'alimentation en dérivation du premier circuit, et en ce que le dispositif d'alimentation sans interruption comporte un commutateur disposé et commandé pour raccorder sélectivement le premier ou le second circuit au port d'alimentation en fonction d'un état de l'alimentation du système électrique dans l'installation.

Ainsi, en fonctionnement normal sans dysfonctionnement particulier et sans nécessité de charge du dispositif de secours, le courant fourni par le réseau ne traverse pas le dispositif de secours et alimente directement l'installation en courant alternatif pour un rendement meilleur. La présence du commutateur commandé par l'installation elle-même permet de ne solliciter le dispositif de secours qu'en cas de nécessité, soit pour une décharge de ses moyens de stockage, par exemple en cas de micro-coupure, soit pour une recharge de ses moyens de stockage suite à un dysfonctionnement de l'alimentation. Finalement, non seulement le rendement est amélioré, mais en plus le dispositif de secours est moins sollicité donc s'use moins vite et les disjoncteurs qui doivent être prévus dans l'installation et/ou en amont de son port d'alimentation peuvent être à courant alternatif.

De façon optionnelle, un dispositif d'alimentation sans interruption selon l'invention peut en outre comporter un disjoncteur à courant alternatif disposé électriquement en sortie des premier et second circuits.

L'invention a également pour objet un ensemble électrique comportant :

- une installation comportant un port d'alimentation en courant alternatif et au moins un système électrique consommateur de courant continu relié électriquement au port d'alimentation par l'intermédiaire d'un dispositif d'alimentation en courant continu à conversion AC/DC, et
- un dispositif d'alimentation sans interruption tel que défini précédemment, raccordé électriquement au port d'alimentation de l'installation et dans lequel le commutateur est commandé pour raccorder sélectivement le premier ou le second circuit au port d'alimentation en fonction d'un état de l'alimentation en courant continu du système électrique dans l'installation.

De façon optionnelle, l'installation comporte en outre au moins un module de gestion de l'alimentation du système électrique conçu pour transmettre un message d'information sur l'état de l'alimentation en courant continu du système électrique à un contrôleur du commutateur.

De façon optionnelle également, l'installation comporte en outre au moins un dispositif de secours supplémentaire, comportant des moyens de charge, de stockage et de décharge d'énergie électrique, raccordé électriquement en dérivation entre le dispositif d'alimentation en courant continu et le système électrique alimenté par ce dispositif d'alimentation en courant continu, le dispositif de secours supplémentaire étant conçu pour transmettre un signal d'alerte en situation de décharge au module de gestion, ce signal d'alerte participant à la définition de l'état de l'alimentation en courant continu du système électrique dans l'installation.

De façon optionnelle également, le module de gestion est relié, à l'aide d'un bus de transmission de données numériques, au dispositif d'alimentation en courant continu, au dispositif de secours supplémentaire, au système électrique et au contrôleur de manière à recevoir et transmettre des données d'information et/ou de commande en provenance et à destination de ce dispositif d'alimentation en courant continu, de ce dispositif de secours, de ce système électrique et de ce contrôleur.

De façon optionnelle également, les moyens de stockage d'énergie électrique du dispositif de secours supplémentaire comportent au moins un supercondensateur à double couche électrochimique.

De façon optionnelle également, les moyens de stockage d'énergie électrique du dispositif de secours supplémentaire comportent au moins un circuit de supercondensateurs disposés en série.

De façon optionnelle également, l'installation comporte un centre de calcul et le système électrique comporte un système de traitement d'information à au moins un calculateur alimenté en très basse tension de ce centre de calcul.

L'invention a également pour objet un procédé d'alimentation sans interruption en courant alternatif d'un port d'alimentation électrique d'une installation comportant au moins un système électrique relié au port d'alimentation, comportant les étapes consistant à :

- alimenter l'installation en courant alternatif par défaut à l'aide d'un premier circuit de raccordement électrique du port d'alimentation à un réseau d'alimentation en courant alternatif,
- alimenter l'installation en courant alternatif à l'aide d'un dispositif de secours, comportant un redresseur, des moyens de charge, de stockage et de décharge d'énergie électrique et un onduleur, disposé électriquement entre le réseau d'alimentation en courant alternatif et le port d'alimentation

de l'installation, en cas de dysfonctionnement de l'alimentation par défaut, caractérisé en ce que, le dispositif de secours étant disposé dans un second circuit d'alimentation en courant alternatif connecté au port d'alimentation en dérivation du premier circuit, le procédé comporte une étape de commutation entre une alimentation par le premier ou le second circuit en fonction d'un état de l'alimentation du système électrique dans l'installation.

L'invention sera mieux comprise à l'aide de la description qui va suivre, donnée uniquement à titre d'exemple et faite en se référant aux dessins annexés dans lesquels :

- la figure 1 représente schématiquement la structure générale d'un ensemble électrique selon un mode de réalisation de l'invention,
- la figure 2 représente un détail de l'ensemble électrique de la figure 1, et
- la figure 3 illustre les étapes successives d'un procédé d'alimentation sans interruption selon un mode de réalisation de l'invention.

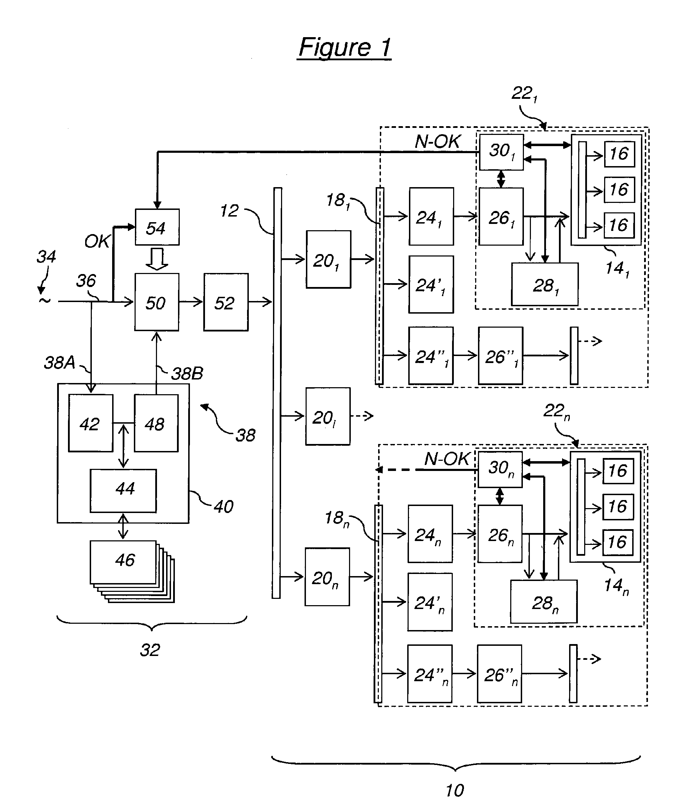

L'ensemble électrique représenté sur la figure 1 comporte une installation 10 de type centre de calcul, comportant un port 12 d'alimentation en courant alternatif dimensionné pour recevoir un courant alternatif à 230 V d'une puissance de 1 MW. Cette puissance d'entrée de l'installation 10 est fournie à titre d'exemple purement illustratif et il apparaîtra évident à l'homme de l'art d'adapter l'enseignement qui lui est divulgué à d'autres puissances pour d'autres configurations d'installation, soit en remplaçant soit en dupliquant les éléments concernés.

En tant que centre de calcul, par exemple un site hébergeant un calculateur HPC, l'installation 10 comporte plusieurs systèmes de traitement d'information $14_1$, ..., $14_n$ tels que des serveurs à un ou plusieurs calculateurs 16 chacun. Chaque système de traitement d'information $14_1$, ..., $14_n$ est un système électrique destiné à être alimenté en courant continu à très basse tension.

Dans l'installation 10, les systèmes de traitement d'information $14_1$, ..., $14_n$ sont reliés électriquement au port d'alimentation 12 par l'intermédiaire éventuellement de plusieurs niveaux de fractionnement de l'énergie électrique et de plusieurs niveaux de protection à base de disjoncteurs.

A un premier niveau de fractionnement illustré sur la figure 1, le courant électrique alternatif à 230 V d'une puissance de 1 MW qui traverse le port d'alimentation 12 est distribué vers plusieurs sections (par exemple des armoires de serveurs) $18_1$, ..., $18_n$. Chacune de ces armoires $18_1$, ..., $18_n$ reçoit par exemple une centaine de kW de courant alternatif à 230 V et est reliée électriquement au port d'alimentation 12 par l'intermédiaire d'un disjoncteur $20_1$, ..., $20_n$.

A un second niveau de fractionnement illustré sur la figure 1, le courant électrique alternatif à 230 V d'une puissance d'une centaine de kW qui traverse l'armoire $18_1$ est distribué vers plusieurs sous sections (par exemple des châssis de serveurs) dont une seule est représentée ($22_1$) par souci de clarté. Le châssis $22_1$, comme les autres châssis éventuels de l'armoire $18_1$, reçoit par exemple une dizaine de kW de courant alternatif à 230 V et est relié électriquement à l'armoire $18_1$ par l'intermédiaire d'un disjoncteur $24_1$.

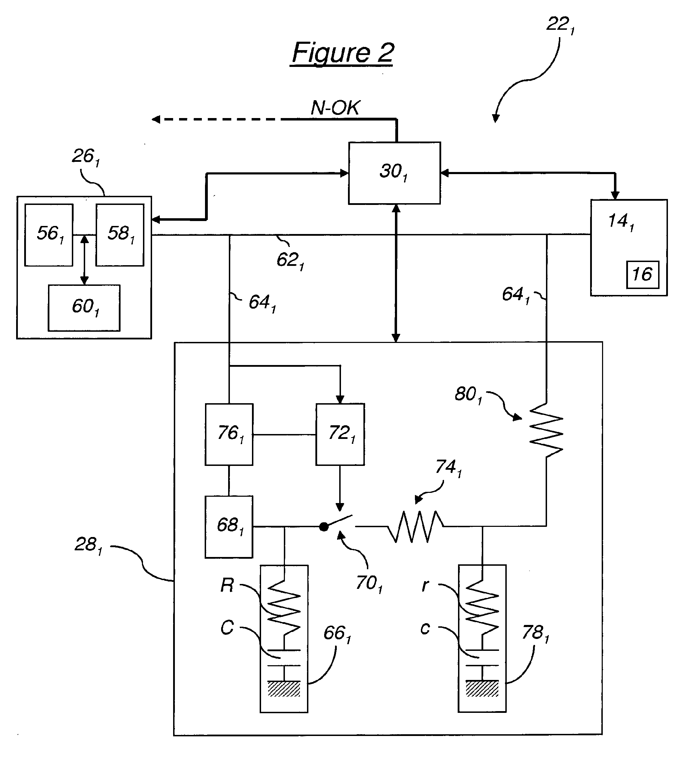

Le châssis $22_1$ comporte un dispositif $26_1$ d'alimentation en courant continu à conversion AC/DC, le système de traitement d'information $14_1$ destiné à être alimenté en courant continu à très basse tension par le dispositif $26_1$, un dispositif de secours $28_1$ activable en cas de défaillance de l'alimentation en courant continu dans le châssis $22_1$ et un module $30_1$ de gestion de l'alimentation du système de traitement d'information $14_1$. Le châssis $22_1$ sera détaillé en référence à la figure 2.

Le système de traitement d'information $14_1$ est donc relié électriquement au port d'alimentation 12 par l'intermédiaire du dispositif $26_1$ d'alimentation en courant continu, mais aussi des disjoncteurs $20_1$ et $24_1$.

L'armoire $18_1$ peut comporter d'autres sous sections, châssis et/ou autres niveaux de fractionnement, reliés électriquement à l'armoire $18_1$ par l'intermédiaire de disjoncteurs (par exemple les disjoncteurs $24'_1$, $24''_1$ illustrés sur la figure 1) et/ou de dispositifs d'alimentation en courant continu à conversion AC/DC (par exemple le convertisseur $26''_1$ illustré sur la figure 1).

De même, les autres armoires de l'installation 10 de la figure 1 peuvent comporter des sous sections selon différentes architectures possibles. L'armoire $18_n$, également détaillée comme l'armoire $18_1$, comporte ainsi plusieurs éléments portant les mêmes références que ceux de l'armoire $18_1$, à l'exception de l'indice « 1 » qui est remplacé par l'indice « n ».

L'ensemble électrique représenté sur la figure 1 comporte en outre un dispositif 32 d'alimentation sans interruption en courant alternatif du port d'alimentation 12 de l'installation 10. Ce dispositif d'alimentation sans interruption 32 est raccordé électriquement, d'une part, à un réseau 34 de distribution de courant alternatif à 50 Hz sous une tension de 230 V et, d'autre part, au port d'alimentation 12. Il comporte :

- un premier circuit 36 de raccordement électrique du port d'alimentation 12 de l'installation 10 au réseau 34, et
- un second circuit 38 d'alimentation de secours en courant alternatif raccordable au port d'alimentation 12 en dérivation du premier circuit 36.

Plus précisément, le second circuit 38 comporte un dispositif de secours général 40 comprenant lui-même un redresseur 42, un gestionnaire 44 de charge et de décharge d'énergie électrique dans des moyens de stockage 46 de type batterie ou autre et un onduleur 48. Il est raccordé directement au premier circuit 36 ou au réseau 34 à l'aide d'une liaison électrique équipotentielle 38A pour l'alimentation en courant alternatif du redresseur 42 lorsque les moyens de stockage 46 sont à charger et de nouveau au premier circuit 36 à l'aide d'une liaison électrique équipotentielle 38B par l'intermédiaire d'un commutateur 50 pour l'alimentation en courant alternatif du port d'alimentation 12 par le dispositif de secours général 40 lorsque les moyens de stockage 46 sont à décharger. Ainsi, dans l'exemple illustré, le second circuit 38 est constitué de la liaison électrique équipotentielle 38A, du dispositif de secours général 40, des moyens de stockage 46 et de la liaison électrique équipotentielle 38B.

Le commutateur 50 est ainsi disposé pour raccorder sélectivement le premier 36 ou le second circuit 38 au port d'alimentation 12 de l'installation 10. Par souci de protection générale de l'installation 10, un disjoncteur général 52 à courant alternatif est en outre disposé en coupure entre le commutateur 50 et le port d'alimentation 12, soit en sortie des premier et second circuits 36, 38.

Par ailleurs, le commutateur 50 est commandé par un contrôleur 54 qui est conçu pour réaliser la sélection du premier ou du second circuit en fonction de messages d'information qu'il reçoit sur un état de l'alimentation des systèmes de traitement d'information $14_1$, ..., $14_n$ de l'installation 10.

A cet effet, le contrôleur 54 est relié, par exemple à l'aide d'un bus de transmission de données numériques, aux modules de gestion $30_1$, ..., $30_n$ des systèmes de traitement d'information $14_1$, ..., $14_n$. Il peut aussi être relié par ce bus à un élément du premier circuit 36. Le bus de transmission de données n'est pas directement illustré sur la figure 1 mais est fonctionnellement représenté par deux flèches en caractères gras symbolisant la réception de données par le contrôleur 54 depuis les modules de gestion $30_1$, ..., $30_n$ et l'élément précité du premier circuit 36. Il peut s'agir de tout bus de transmission de données adapté dans le contexte de l'application illustrée : par exemple un bus RS485, CAN, Ethernet, RS232 ou autre.

Les messages d'information susceptibles d'être pris en compte par le contrôleur 54 comportent par exemple des messages d'alerte N-OK sur l'alimentation en courant continu des systèmes de traitement d'information $14_1$, ..., $14_n$ en provenance des modules de gestion $30_1$, ..., $30_n$ et des messages OK de reprise de service en provenance du premier circuit 36.

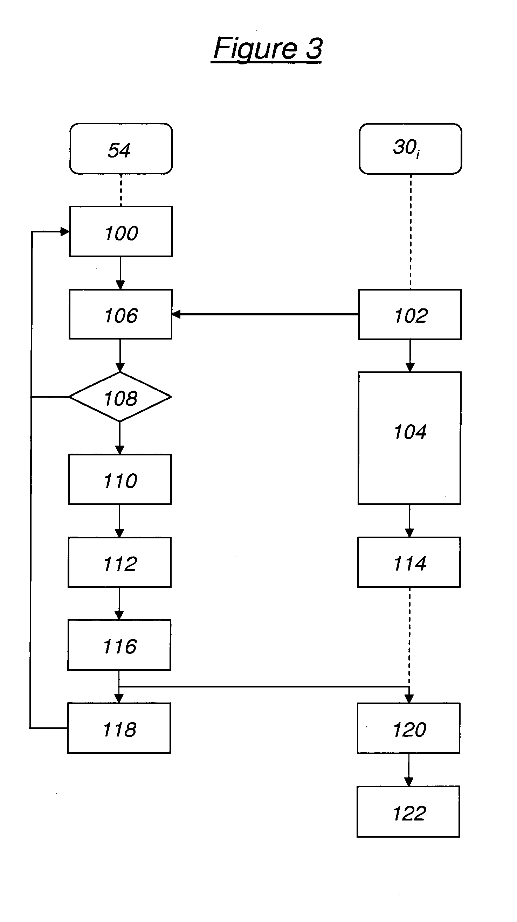

En pratique le contrôleur 54 peut être de nature logicielle ou matérielle et, s'il est de nature matérielle, peut comporter un matériel de type « hardware » dédié ou puce programmée. Un exemple de son fonctionnement sera détaillé en référence à la figure 3.

Le châssis $22_1$ détaillé sur la figure 2 comporte le système de traitement d'information $14_1$ destiné à être alimenté en courant continu, à une intensité qu'il impose en fonction de sa consommation à chaque instant et à une tension prédéterminée sensiblement constante. A titre purement illustratif, le système de traitement d'information $14_1$ est par exemple conçu pour être alimenté en courant continu de 700 A sous une tension sensiblement constante de 12 V.

Par « sensiblement constante », on entend une tension continue dont les variations sont suffisamment faibles autour de sa valeur de référence (en l'occurrence 12 V dans l'application considérée) pour que le système de traitement d'information $14_1$ puisse les supporter sans dommage pour ses composants de traitement d'information. Etant donné que les systèmes de traitement d'information, par exemple de type calculateurs, sont munis d'un étage de conversion interne qui régule le courant qu'ils consomment en fonction de la tension qu'ils utilisent pour fournir une tension très régulière pouvant descendre jusqu'à moins de 1 V, des variations de 10 à 15 % autour de la valeur de référence de la tension continue dite sensiblement constante fournie en entrée de ces systèmes sont acceptables. Ainsi par exemple, il est acceptable de considérer qu'une tension continue sensiblement constante de 12 V puisse varier entre 11 et 13 V. Une telle tension sensiblement constante est par exemple obtenue par une régulation de la tension continue fournie au système de traitement d'information $14_1$ à l'aide d'une tension seuil maximale et d'une tension seuil minimale de référence.

Pour assurer cette alimentation, le châssis $22_1$ comporte donc le dispositif $26_1$ d'alimentation en courant continu à conversion AC/DC transformant le courant alternatif à 50 Hz sous une tension de 230 V en un courant continu délivré sous une tension de 12 V. Ce dispositif $26_1$ d'alimentation en courant continu comporte de façon classique un redresseur associé à une alimentation à découpage $56_1$, qui fournit, à partir du courant à 50 Hz sous 230 V, un courant continu à 400 V à une seconde alimentation à découpage DC/DC $58_1$ dont les fonctions sont d'isoler l'entrée de la sortie du dispositif $26_1$ à l'aide d'un transformateur et de convertir le courant continu à 400 V en courant continu à 12 V. En dérivation du circuit qui relie le redresseur $56_1$ à la seconde alimentation à découpage DC/DC $58_1$, le dispositif $26_1$ comporte un condensateur ou ensemble de condensateurs, dit bloc condensateur « holdup » $60_1$, capable a priori de résister pendant plusieurs dizaines de millisecondes, par exemple environ 20 ms, à une interruption d'alimentation. Ce bloc condensateur « holdup » $60_1$ stocke la valeur crête du signal électrique redressé à 400 V.

Le système de traitement d'information $14_1$, plus particulièrement son alimentation en courant continu, est relié au dispositif $26_1$ d'alimentation en courant continu à l'aide d'un premier circuit d'alimentation $62_1$ qui sera nommé dans la suite de la description « premier circuit de châssis $62_1$ » pour ne pas être confondu avec le premier circuit d'alimentation générale 36.

Un second circuit de dérivation $64_1$ d'une partie du courant continu fourni par le dispositif $26_1$ d'alimentation en courant continu est disposé dans le châssis $22_1$ parallèlement au premier circuit de châssis $62_1$ entre le dispositif $26_1$ et le système de traitement d'information $14_1$. Ce second circuit de dérivation $64_1$ sera nommé dans la suite de la description « second circuit de châssis $64_1$ » pour ne pas être confondu avec le second circuit de dérivation générale 38.

Ce second circuit de châssis $64_1$ comporte le dispositif de secours $28_1$ du châssis $22_1$. Il permet donc, au dispositif de secours $28_1$, de puiser une partie du courant continu délivré pour le système de traitement d'information $14_1$ par le dispositif $26_1$ d'alimentation en courant continu afin de stocker de l'énergie électrique, et de fournir, en cas de défaillance de l'alimentation en courant dans le premier circuit de châssis $62_1$, du courant continu, puisé à partir de l'énergie électrique stockée, au système de traitement d'information $14_1$. En d'autres termes, le dispositif de secours $28_1$ est conçu pour prendre le relais du dispositif d'alimentation $26_1$ en cas de défaillance dans le châssis $22_1$.

Le dispositif de secours $28_1$ comporte des moyens $66_1$ de stockage d'énergie électrique. Ces moyens de stockage $66_1$ peuvent comporter une ou plusieurs batteries classiques. Les batteries d'accumulateurs présentent généralement un bon rapport d'énergie stockée par unité de volume. En revanche, elles présentent un mauvais rapport de puissance crête émise par unité de volume ce qui les rend peu avantageuses pour des applications où le système de traitement d'information $14_1$ est consommateur d'un courant continu de forte intensité. C'est le cas notamment lorsque le système de traitement d'information $14_1$ est un calculateur HPC puisqu'un courant continu de 700 A peut être nécessaire. Dans ce cas, les moyens $66_1$ de stockage d'énergie électrique comportent avantageusement au moins un supercondensateur, de préférence au moins un circuit de supercondensateurs disposés en série, dont le rapport de puissance crête émise par unité de volume est nettement supérieur. Cette puissance crête ne peut cependant pas être émise pendant une durée trop longue, mais c'est largement suffisant pour pallier les défaillances, notamment les micro-coupures d'un réseau d'alimentation en courant alternatif de bonne qualité, celles-ci ne dépassant généralement pas quelques centaines de millisecondes.

Les supercondensateurs sont généralement de type EDLC (de l'Anglais « Electrochemical Double Layer Capacitor »), c'est-à-dire conçus selon le procédé de double couche électrochimique. Ils présentent une résistance interne nettement inférieure à celle des batteries. Les moyens $66_1$ de stockage d'énergie électrique à supercondensateurs peuvent être modélisés par un circuit de type RC série (i.e. circuit comportant une résistance et un condensateur en série), relié d'une part à la masse et d'autre part au second circuit de châssis $64_1$, de résistance R et de capacité C.

Le dispositif de secours $28_1$ comporte en outre des moyens $68_1$ de charge des moyens $66_1$ de stockage d'énergie électrique à partir d'une partie du courant continu fourni par le dispositif $26_1$ d'alimentation en courant continu à l'alimentation du système de traitement d'information $14_1$. Ces moyens de charge $68_1$ sont constitués d'un chargeur de supercondensateurs classique et ne seront donc pas détaillés. Ils permettent de charger les moyens $66_1$ de stockage d'énergie électrique en quelques minutes, en général pas plus de trois minutes, perturbant ainsi assez peu le fonctionnement du système de traitement d'information $14_1$.

Le dispositif d'alimentation de secours $28_1$ comporte aussi des moyens $70_1$, $72_1$ de décharge de l'énergie stockée dans les moyens $66_1$ de stockage d'énergie électrique vers l'alimentation du système de traitement d'information $14_1$, à une intensité donnée (imposée par le système de traitement d'information $14_1$) et une tension prédéterminée sensiblement constante, suite à la détection d'une défaillance (baisse de tension en deçà d'un seuil acceptable) dans le premier circuit de châssis $62_1$.

Ces moyens de décharge comportent un commutateur $70_1$ commandé par un contrôleur $72_1$. Le commutateur

$70_1$ comprend par exemple au moins une paire de transistors N-MOS à effet de champ disposés tête-bêche en série. Cette disposition par paire permet d'isoler les supercondensateurs des moyens $66_1$ de stockage d'énergie électrique du système de traitement d'information $14_1$, quelle que soit la tension aux bornes des supercondensateurs et du système de traitement d'information $14_1$. Par ailleurs, si au moment de la décharge le courant destiné à traverser le commutateur $70_1$ est supérieur à ce que peut supporter une telle paire de transistors, plusieurs paires de transistors disposées en parallèle, commandées par le même contrôleur $72_1$, peuvent être prévues pour former le commutateur $70_1$.

Le commutateur $70_1$ est illustré sur la figure 2 par un interrupteur idéal auquel est associée une résistance interne $74_1$. Le contrôleur $72_1$ est, quant à lui, conçu pour pouvoir détecter une défaillance d'alimentation en courant continu dès que la valeur de la tension fournie au système de traitement d'information $14_1$ devient inférieure à une tension seuil prédéterminée.

Comme indiqué précédemment, le courant continu de 700 A fourni par le dispositif $26_1$ d'alimentation en courant continu à l'alimentation du système de traitement d'information $14_1$ présente par exemple une tension de 12 V sur le premier circuit de châssis $62_1$. Le courant prélevé par le second circuit de châssis $64_1$ présente donc a priori cette même tension de 12 V. Cependant, pour qu'en cas de défaillance les moyens $66_1$ de stockage d'énergie électrique puissent fournir un courant continu au système de traitement d'information $14_1$ à cette même tension de 12 Volts, il est nécessaire que ceux-ci soient chargés à une tension supérieure, à cause notamment de la résistance interne des moyens $66_1$ de stockage d'énergie électrique et de celle du commutateur $70_1$. Par exemple, cette tension supérieure nécessaire peut être voisine de 15 Volts. En outre, du fait que le commutateur $70_1$ est composé de transistors MOS à effet de champ dont il faut alimenter la grille, le contrôleur $72_1$ doit fournir en général une tension supérieure à 20 Volts.

Pour ces raisons, un rehausseur de tension $76_1$ de type classique est fourni en amont du chargeur $68_1$ et du contrôleur $72_1$ dans le second circuit de châssis $64_1$, pour rehausser la tension de 12 V à 21 V par exemple. Selon une autre variante, deux rehausseurs de tension différents pourraient être envisagés, l'un pour le chargeur $68_1$, l'autre pour le contrôleur $72_1$, puisque les tensions dont ils ont besoin ne sont pas les mêmes.

Le dispositif de secours $28_1$ fonctionne de la façon suivante :

-    lorsque le système de traitement d'information $14_1$ est alimenté en courant continu par le dispositif $26_1$ d'alimentation en courant continu, une partie de ce courant est détournée par le second circuit de châssis $64_1$ pour charger les moyens $66_1$ de stockage d'énergie électrique, tant que ceux-ci ne sont pas encore complètement chargés,
-    lorsqu'une défaillance est détectée par le contrôleur $72_1$, celui-ci commande la fermeture du commutateur $70_1$ pour que les moyens $66_1$ de stockage d'énergie électrique prennent le relais du premier circuit de châssis $62_1$ défaillant.

Le temps mis par le commutateur $70_1$ pour se fermer et laisser passer le courant provenant des moyens $66_1$ de stockage d'énergie électrique peut cependant être suffisant pour perturber le fonctionnement du système de traitement d'information $14_1$. Le dispositif de secours $28_1$ comporte donc avantageusement des moyens supplémentaires $78_1$ de stockage d'énergie électrique, par exemple constitués de condensateurs simples, dits condensateurs de lissage, disposés en parallèle en sortie du commutateur $70_1$. Les moyens supplémentaires $78_1$ de stockage d'énergie électrique peuvent, comme les moyens de stockage $66_1$ à supercondensateurs, être modélisés par un circuit de type RC série, relié d'une part à la masse et d'autre part au second circuit de châssis $64_1$ en sortie du commutateur $70_1$, de résistance r et de capacité c. A titre d'exemple non limitatif, une vingtaine de condensateurs de lissage peuvent être disposés en sortie du commutateur $70_1$, pour une résistance r de 0,5 mΩ et une capacité c de 0,01 F.

Grâce à ces moyens supplémentaires $78_1$ de stockage d'énergie électrique, le dispositif d'alimentation de secours $28_1$ fonctionne plus précisément de la façon suivante :

-    lorsque le système de traitement d'information $14_1$ est alimenté en courant continu par le dispositif $26_1$ d'alimentation en courant continu, une partie de ce courant est détournée pendant une durée limitée par le second circuit de châssis $64_1$ pour charger les moyens $66_1$ de stockage d'énergie électrique, tant que ceux-ci ne sont pas encore complètement chargés,
-    une petite partie de ce courant est également détournée pendant une durée limitée pour charger les moyens supplémentaires $78_1$ de stockage d'énergie électrique tant que ceux-ci ne sont pas encore complètement chargés,
-    lorsqu'une défaillance est détectée par le contrôleur $72_1$, celui-ci commande la fermeture du commutateur $70_1$,
-    entre le début de la défaillance et la fermeture effective du commutateur $70_1$, une partie de l'énergie électrique accumulée dans les moyens supplémentaires $78_1$ de stockage d'énergie est transmise au système de traitement d'information $14_1$, et
-    lorsque le commutateur $70_1$ est effectivement fermé, les moyens $66_1$ de stockage d'énergie électrique prennent le relais du premier circuit de châssis $62_1$ défaillant.

On comprendra qu'il n'est pas utile de prévoir des supercondensateurs dans les moyens supplémentaires $78_1$ de stockage d'énergie électrique puisqu'ils ne sont destinés à fournir leur énergie stockée que pendant un très court temps de transition de l'ordre de quelques microsecondes, nettement inférieur à la durée de la défaillance.

Concrètement, le dispositif de secours $28_1$, avec son chargeur $68_1$, son contrôleur $72_1$, son rehausseur de tension $76_1$, son commutateur $70_1$, et ses moyens de stockage $66_1$ et $78_1$, est monté sur une carte formant support et présentant une résistance interne $80_1$ égale par exemple à 0,1 mΩ.

Alors que le système de traitement d'information $14_1$ est alimenté par le dispositif $26_1$ en courant continu de 12 V à partir d'un courant alternatif à 230 V via le premier circuit de châssis $62_1$, le second circuit de châssis $64_1$ est lui aussi raccordé au premier circuit de châssis $62_1$ de sorte qu'il permet une charge du dispositif de secours $28_1$ à l'aide de ce courant continu de 12 V. Cette charge se fait par une consommation de courant continu comprise généralement entre 0,5 et 18 A. Le second circuit de châssis $64_1$ permet aussi au contrôleur $72_1$ de prélever la valeur de la tension du courant continu fourni par le premier circuit de châssis $62_1$ de manière à pouvoir détecter une éventuelle défaillance, par l'apparition d'une baisse de tension.

Le rehausseur de tension $76_1$, par exemple un convertisseur DC/DC à découpage, rehausse la tension du courant continu fourni par le second circuit de châssis $64_1$ en un courant continu à 21 V d'intensité comprise entre 0 et 9 A selon que le dispositif $28_1$ de secours est en situation de charge ou non. Ce courant alimente le contrôleur $72_1$ et le chargeur $68_1$.

Le chargeur $68_1$ fournit à son tour aux moyens $66_1$ de stockage d'énergie électrique un courant continu dont l'intensité varie entre 0 et 12 A selon que le dispositif $28_1$ de secours est en situation de charge ou non.

Il convient de dimensionner les moyens $66_1$ de stockage d'énergie électrique de sorte qu'en situation de décharge, ils puissent fournir un courant de 700 A pendant par exemple au plus 480 ms sous une tension d'environ 12 V toujours au moins supérieure à une limite prédéterminée par exemple fixée à 11 V.

De façon concrète, les moyens $66_1$ de stockage d'énergie électrique comportent au moins un circuit de six supercondensateurs disposés en série. Pour des dimensions acceptables, il est possible de trouver des supercondensateurs dont les caractéristiques sont les suivantes : une capacité égale à 600 F, une résistance interne égale à 0,83 mΩ et une différence de potentiel maximale supportée aux bornes du supercondensateur de 2,7 V. Ainsi, un circuit de six supercondensateurs disposés en série présente une capacité équivalente C = 100 F et une résistance interne équivalente R = 4,98 mΩ. On montre que l'évolution au bout d'un temps T de la tension délivrée par un tel circuit pendant la décharge de ses supercondensateurs vérifie l'équation suivante :

$$V = ( V_0 - IT / C ) - RI, \hspace{4cm} (1)$$

où $V_0$ est la tension de charge que doit délivrer le chargeur $68_1$, I = 700 A le courant délivré par le circuit, T = 480 ms le temps maximal de décharge.

On voit que, sous ces conditions, pour que la tension V délivrée par le circuit soit toujours supérieure à 11 V, il faut que la tension de charge $V_0$ soit au moins de 17,85 V. Or la différence de potentiel maximale supportée aux bornes des six condensateurs précités est de 6x2,7 V = 16,2 V. Il apparaît donc qu'un seul circuit de six condensateurs ne suffit pas.

En prévoyant deux circuits de six condensateurs tels que ceux précités, disposés en parallèle, on conçoit des moyens $66_1$ de stockage d'énergie électrique dont la capacité équivalente C vaut 200 F et la résistance interne équivalente R vaut 2,49 mΩ. Sous ces nouvelles conditions, pour que la tension V du courant délivré par les moyens $66_1$ de stockage d'énergie électrique soit toujours supérieure à 11 V, il faut que la tension de charge $V_0$ soit au moins de 14,42 V. En pratique, la chute de tension aux bornes du commutateur $70_1$ impose une tension de charge légèrement supérieure, par exemple égale à $V_0$ = 14,8 V. En tenant compte en outre de la résistance interne des moyens $66_1$ de stockage d'énergie électrique, il est ainsi possible pour le second circuit de châssis $64_1$ de délivrer un courant de 700 A sous une tension sensiblement constante, c'est-à-dire toujours comprise entre 11 et 13 V, en situation de décharge du dispositif de secours $28_1$, pendant une durée maximale de 480 ms. On notera aussi que des moyens $66_1$ de stockage d'énergie électrique présentant ces paramètres de résistance et capacité équivalentes à l'aide de supercondensateurs peuvent être chargés en moins de trois minutes par le chargeur $68_1$.

La duplication possible voire souhaitable du circuit de six supercondensateurs dans les moyens $66_1$ de stockage d'énergie électrique vient d'être détaillée. Il est également possible, pour des raisons pratiques, de dupliquer le rehausseur de tension $76_1$, le chargeur $68_1$, le contrôleur $72_1$ et le commutateur $70_1$.

Le module $30_1$ de gestion de l'alimentation du système de traitement d'information $14_1$ du châssis $22_1$ est relié, par exemple à l'aide d'un bus de transmission de données numériques, au dispositif d'alimentation $26_1$, au système de traitement d'information $14_1$ et au dispositif de secours $28_1$ de manière à recevoir et transmettre des données d'information et/ou de commande en provenance et à destination de ce dispositif d'alimentation $26_1$, de ce système de traitement d'information $14_1$ et de ce dispositif de secours $28_1$. Le bus de transmission de données n'est pas directement illustré sur la figure 2 mais est fonctionnellement représenté par les doubles flèches en caractères gras symbolisant les échanges de données depuis et vers le module de gestion $30_1$. Il peut s'agir de tout bus de transmission de données adapté dans le contexte de l'application illustrée : par exemple un bus I²C (développé par Philips), SPI (développé par Motorola), JTag (normalisé par IEEE) ou autre.

En pratique le module de gestion $30_1$ peut être de nature logicielle ou matérielle et, s'il est de nature matérielle, peut comporter un matériel de type « hardware » dédié ou puce programmée. Il peut être intégré au système de traitement d'information $14_1$, notamment intégré dans un serveur de contrôle HPC lorsque le système $14_1$ est un calculateur HPC.

Il est apte à recevoir des alertes de défaillance en provenance du dispositif d'alimentation $26_1$, du dispositif de secours $28_1$ lorsque celui-ci a lui-même détecté automatiquement cette défaillance, ou en dernier ressort du système de traitement d'information $14_1$. Il est aussi apte à recevoir une information de démarrage de la décharge du dispositif de secours $28_1$ si celui-ci est apte à se décharger automatiquement lorsqu'une défaillance survient. Cette information de démarrage que le dispositif de secours $28_1$ est conçu pour émettre lorsqu'il se décharge est traitée par le module de gestion $30_1$ comme un signal d'alerte sur l'état de l'alimentation en courant continu du système de traitement d'information $14_1$.

Le module de gestion $30_1$ est ainsi plus précisément programmé pour :

- recevoir des signaux d'alerte sur l'état de l'alimentation en courant continu du système de traitement d'information $14_1$,
- transmettre une commande de démarrage du dispositif de secours $28_1$ si celui-ci n'est pas apte à se décharger automatiquement lorsqu'une défaillance survient,
- transmettre au contrôleur 54 un message d'alerte N-OK en cas de détection d'une défaillance suite à la réception d'au moins un signal d'alerte, et
- en dernier ressort, transmettre une commande d'arrêt du système de traitement d'information 10.

La description détaillée ci-dessus des éléments du châssis $22_1$ vaut également pour les éléments des autres châssis $22_2$, ..., $22_n$.

Un procédé d'alimentation sans interruption en courant alternatif du port d'alimentation 12, notamment un fonctionnement du contrôleur 54 en coordination avec les modules de gestion $30_1$, ..., $30_n$, va maintenant être détaillé en référence à la figure 3.

Au cours d'une première étape 100 de fonctionnement sans événement particulier, le commutateur 50 est commandé par le contrôleur 54 pour alimenter par défaut directement le port d'alimentation 12 de l'installation 10 en courant alternatif fourni par le réseau 34 via le premier circuit d'alimentation 36. Durant cette étape, le dispositif de secours général 40 et les dispositifs de secours de châssis $28_1$, ..., $28_n$ sont supposés complètement chargés. Par ailleurs, les systèmes de traitement d'information $14_1$, ..., $14_n$ sont supposés fonctionner à plein régime de consommation, soit à 1 MW.

Lorsqu'un incident d'alimentation intervient dans au moins l'un des châssis $22_1$, ..., $22_n$, si cet incident est de durée inférieure au temps de décharge du bloc condensateur « holdup » de l'un quelconque des dispositifs $26_1$, ..., $26_n$ d'alimentation en courant continu (par exemple 20 ms), alors rien ne se passe, excepté la transmission éventuelle d'une notification d'incident par le dispositif d'alimentation $26_i$ concerné à son module de gestion $30_i$.

Si l'incident est de durée supérieure à ce temps de décharge, alors une baisse de tension devient perceptible dans au moins l'un des premiers circuits de châssis $62_1$, ..., $62_n$.

L'incident peut être dû à un problème de coupure dans le réseau 34 ou à un autre problème d'alimentation à un endroit quelconque dans l'installation 10. Dans tous les cas, il se propage vers tous les premiers circuits de châssis $62_1$, ..., $62_n$ situés en aval de l'origine de cet incident. Il est ainsi détecté par au moins un module de gestion $30_i$ lors d'une étape 102. Ce module de gestion $30_i$ transmet alors au contrôleur 54 un message d'alerte N-OK. Au cours de cette même étape 102, l'incident déclenche une décharge 104 du dispositif de secours $28_i$ correspondant.

Au cours d'une étape 106, le contrôleur 54 reçoit au moins un message d'alerte N-OK d'au moins un module de gestion $30_i$. Ensuite, pendant la décharge 104 et au cours d'une étape de test 108, le contrôleur 54 détermine si l'incident concerne une partie seulement ou tous les châssis $22_1$, ..., $22_n$.

Si l'incident ne concerne qu'une partie des châssis, alors l'incident est considéré comme interne à l'installation 10 et le contrôleur 54 repasse à l'étape 100. Sinon, l'incident est considéré comme ayant pour origine une coupure du réseau 34 et l'on passe à une étape 110, toujours pendant la décharge 104, au cours de laquelle le contrôleur 54 commande le commutateur 50 pour que ce dernier relie le dispositif de secours général 40 (donc le second circuit 38) au port d'alimentation 12 de manière à démarrer une décharge du dispositif de secours général 40.

Dans une variante, le contrôleur 54 peut attendre un certain temps avant de déclencher l'étape 110, dans le but de ne pas démarrer le dispositif de secours général 40 si l'incident n'est qu'une micro-coupure du réseau 34 gérable par les dispositifs de secours $28_1$, ..., $28_n$ de châssis. Ce temps d'attente doit être ni trop court pour pouvoir inclure une micro-coupure (de l'ordre de quelques centaines de millisecondes) ni trop long pour assurer que le démarrage du dispositif de secours général 40 puisse se faire pendant la décharge des dispositifs de secours $28_1$, ..., $28_n$ de châssis.

La décharge 104 dure suffisamment de temps pour permettre une commutation et un démarrage 110 sans chute de tension du dispositif de secours général 40.

Tant que le réseau 34 est défaillant, l'installation 10 est alimentée par le dispositif de secours général 40 pendant une étape 112. Notamment, les dispositifs de secours $28_1$, ..., $28_n$ de châssis et/ou les blocs condensateurs « holdup » éventuellement déchargés peuvent se recharger pendant cette phase d'alimentation de secours 112, ce qui ne pose pas de problème puisque cette recharge, référencée par l'étape 114, ne prend que quelques secondes, 20 s au plus.

Au cours d'une étape 116, le contrôleur 54 reçoit un message OK en provenance d'un élément du premier circuit d'alimentation 36 lui indiquant le rétablissement du réseau 34.

On passe alors à une étape 118 au cours de laquelle le contrôleur 54 commande le commutateur 50 pour que ce dernier revienne en position de raccordement direct du port d'alimentation 12 au réseau 34 via le premier circuit 36. Comme pour l'étape 110, une décharge 120 des dispositifs de secours $28_1$, ..., $28_n$ de châssis peut être commandée pendant l'exécution de l'étape 118 tant que l'alimentation par le réseau 34 n'est pas complètement opérationnelle.

Suite à l'étape 118, on revient à l'étape 100. Par ailleurs, suite à la décharge 120, une recharge 122 des dispositifs de secours $28_1$, ..., $28_n$ de châssis et/ou des blocs condensateurs « holdup » éventuellement déchargés s'exécute automatiquement.

Il apparaît clairement qu'un dispositif et un procédé d'alimentation sans interruption tels que ceux décrits précédemment permettent de ne solliciter le dispositif de secours général 40 qu'en cas de nécessité et sans prendre de risque pour l'installation 10. La durée de vie du dispositif de secours général 40 s'en trouve ainsi allongée ce qui est économiquement très avantageux puisque ce genre de dispositif est généralement très coûteux.

**Revendications**

1. Ensemble électrique comportant une installation (10) comportant un port (12) d'alimentation en courant alternatif et au moins un système électrique ($14_1$, ..., $14_n$), et un dispositif (32) d'alimentation sans interruption en courant alternatif du port d'alimentation (12), le dispositif d'alimentation sans interruption (32) comportant :

   - un premier circuit (36) de raccordement électrique du port (12) d'alimentation de l'installation (10) à un réseau (34) d'alimentation en courant alternatif,
   - un dispositif de secours (40), comportant un redresseur (42), des moyens (44, 46) de charge, de stockage et de décharge d'énergie électrique et un onduleur (48), raccordable au port (12) d'alimentation de l'installation (10),

   le dispositif de secours (40) étant disposé dans un second circuit (38) d'alimentation en courant alternatif raccordable au port d'alimentation (12) en dérivation du premier circuit (36), le dispositif d'alimentation sans interruption (32) comportant un commutateur (50) disposé et commandé par un contrôleur (54) pour raccorder sélectivement le premier (36) ou le second (38) circuit au port d'alimentation (12), **caractérisé en ce que** :

   - chaque système électrique ($14_1$, ..., $14_n$) de l'installation (10) est consommateur de courant continu et relié électriquement au port d'alimentation (12) par l'intermédiaire d'un dispositif ($26_1$, ..., $26_n$) d'alimentation en courant continu à conversion AC/DC,
   - l'installation (10) comporte en outre au moins un module ($30_1$, ..., $30_n$) de gestion de l'alimentation en courant continu du système électrique ($14_1$, ..., $14_n$) par le dispositif ($26_1$, ..., $26_n$) d'alimentation en courant continu à conversion AC/DC, ce module de gestion ($30_1$, ..., $30_n$) étant conçu pour transmettre un message d'information (N-OK) sur un état de l'alimentation en courant continu du système électrique ($14_1$, ..., $14_n$) au contrôleur (54) du commutateur (50), et
   - le contrôleur (54) est conçu pour commander le raccordement sélectif, par le commutateur (50) du premier (36) ou du second (38) circuit au port d'alimentation (12) en fonction de l'état de l'alimentation en courant continu du système électrique ($14_1$, ..., $14_n$) tel qu'indiqué dans le message d'information (N-OK) transmis par le module de gestion ($30_1$, ..., $30_n$).

2. Ensemble électrique selon la revendication 1, comportant en outre un disjoncteur à courant alternatif (52) disposé électriquement en sortie des premier et second circuits (36, 38).

3. Ensemble électrique selon la revendication 1 ou 2, dans lequel l'installation (10) comporte en outre au moins un dispositif de secours supplémentaire ($28_1$, ..., $28_n$), comportant des moyens de charge, de stockage et de décharge d'énergie électrique, raccordé électriquement en dérivation entre le dispositif ($26_1$, ..., $26_n$) d'alimentation en courant continu et le système électrique ($14_1$, ..., $14_n$) alimenté par ce dispositif d'alimentation en courant continu, le dispositif de secours supplémentaire ($28_1$, ..., $28_n$) étant conçu pour transmettre un signal d'alerte en situation de décharge au module de gestion ($30_1$, ..., $30_n$), ce signal d'alerte participant à la définition de l'état de l'alimentation en courant continu du système électrique dans l'installation.

4. Ensemble électrique selon la revendication 3, dans lequel le module de gestion ($30_1$, ..., $30_n$) est relié, à l'aide d'un bus de transmission de données numériques, au dispositif ($26_1$, ..., $26_n$) d'alimentation en courant continu , au dispositif de secours supplémentaire ($28_1$, ..., $28_n$), au système électrique ($14_1$, ..., $14_n$) et au contrôleur (54) de manière à recevoir et transmettre des données d'information et/ou de commande en provenance et à destination de ce dispositif ($26_1$, ..., $26_n$) d'alimentation en courant continu, de ce dispositif de secours supplémentaire ($28_1$, ..., $28_n$), de ce système électrique ($14_1$, ..., $14_n$) et de ce contrôleur (54).

5. Ensemble électrique selon la revendication 3 ou 4, dans lequel les moyens ($66_1$) de stockage d'énergie électrique du dispositif de secours supplémentaire comportent au moins un supercondensateur à double couche électrochimique.

6. Ensemble électrique selon la revendication 5, dans lequel les moyens ($66_1$) de stockage d'énergie électrique du dispositif de secours supplémentaire comportent au moins un circuit de supercondensateurs disposés en série.

7. Ensemble électrique selon l'une quelconque des revendications 1 à 6, dans lequel l'installation (10) comporte un centre de calcul et le système électrique ($14_1$, ..., $14_n$) comporte un système de traitement d'information à au moins un calculateur (16) alimenté en tension continue inférieure à 120 V de ce centre de calcul.

8. Procédé d'alimentation sans interruption en courant alternatif d'un port (12) d'alimentation électrique d'une installation (10) comportant au moins un système électrique ($14_1$, ..., $14_n$) relié au port d'alimentation, comportant les étapes consistant à :

- alimenter (100) l'installation (10) en courant alternatif par défaut à l'aide d'un premier circuit (36) de raccordement électrique du port d'alimentation (12) à un réseau (34) d'alimentation en courant alternatif,
- alimenter (112) l'installation (10) en courant alternatif à l'aide d'un dispositif de secours (40), comportant un redresseur (42), des moyens (44, 46) de charge, de stockage et de décharge d'énergie électrique et un onduleur (48), disposé électriquement entre le réseau (34) d'alimentation en courant alternatif et le port (12) d'alimentation de l'installation (10), en cas de dysfonctionnement de l'alimentation par défaut (100),

le dispositif de secours (40) étant disposé dans un second circuit (38) d'alimentation en courant alternatif connecté au port d'alimentation (12) en dérivation du premier circuit (36), le procédé comportant en outre une étape de commutation (110, 118), par un commutateur (50) commandé par un contrôleur (54), entre une alimentation par le premier (36) ou le second (38) circuit, le procédé étant **caractérisé en ce que**, chaque système électrique ($14_1$, ..., $14_n$) étant consommateur de courant continu et relié électriquement au port d'alimentation (12) par l'intermédiaire d'un dispositif ($26_1$, ..., $26_n$) d'alimentation en courant continu à conversion AC/DC, il comporte en outre une étape de transmission, par un module de gestion ($30_1$, ..., $30_n$) de l'installation (10), d'un message d'information (N-OK) sur un état d'une alimentation en courant continu du système électrique ($14_1$, ..., $14_n$) au contrôleur (54) du commutateur (50), et **en ce que** la commande du commutateur (50) par le contrôleur (54) pour une commutation entre une alimentation par le premier (36) ou le second (38) circuit est exécutée en fonction de l'état de l'alimentation en courant continu du système électrique ($14_1$, ..., $14_n$) tel qu'indiqué dans le message d'information (N-OK) transmis par le module de gestion ($30_1$, ..., $30_n$).

**Patentansprüche**

1. Elektrische Baugruppe, die eine Einrichtung (10) mit einem Wechselstromversorgungsanschluss (12) und mindestens einem elektrischen System ($14_1$, ..., $14_n$) und eine Vorrichtung (32) zur unterbrechungsfreien Versorgung des Versorgungsanschlusses (12) mit Wechselstrom aufweist, wobei die Vorrichtung (32) zur unterbrechungsfreien Versorgung Folgendes aufweist:

- eine erste Schaltung (36) für das elektrische Anschließen des Versorgungsanschlusses (12) der Einrichtung (10) an ein Wechselstromversorgungsnetz (34),
- eine an den Versorgungsanschluss (12) der Einrichtung (10) anschließbare Hilfsvorrichtung (40) mit einem Gleichrichter (42), Mitteln (44, 46) zum Laden, Speichern und Entladen von elektrischer Energie und einem Wechselrichter (48),

wobei die Hilfsvorrichtung (40) in einer zweiten Schaltung (38) zur Wechselstromversorgung angeordnet ist, die im Nebenschluss zur ersten Schaltung (36) an den Versorgungsanschluss (12) angeschlossen werden kann, wobei die Vorrichtung (32) zur unterbrechungsfreien Versorgung einen Schalter (50) aufweist, der so angeordnet und von einer Steuereinheit (54) so gesteuert wird, dass wahlweise die erste (36) oder zweite Schaltung (38) an den Versorgungsanschluss (12) angeschlossen wird, **dadurch gekennzeichnet, dass**:

- jedes elektrische System ($14_1$, ..., $14_n$) der Einrichtung (10) ein Gleichstromverbraucher ist und über eine Gleichstromversorgungsvorrichtung ($26_1$, ..., $26_n$) mit AC/DC-Umwandlung elektrisch mit dem Versorgungsanschluss (12) verbunden ist,
- die Einrichtung (10) ferner mindestens ein Modul ($30_1$, ..., $30_n$) zur Steuerung der Gleichstromversorgung des elektrischen Systems ($14_1$, ..., $14_n$) über die Gleichstromversorgungsvorrichtung ($26_1$, ..., $26_n$) mit AC/DC-Umwandlung aufweist, wobei dieses Steuerungsmodul ($30_1$, ..., $30_n$) dazu ausgelegt ist, eine Meldung (N-OK) zur Information über einen Gleichstromversorgungszustand des elektrischen Systems ($14_1$, ..., $14_n$) zur Steuereinheit (54) des Schalters (50) zu übertragen, und
- die Steuereinheit (54) dazu ausgelegt ist, das wahlweise Anschließen der ersten (36) oder zweiten (38) Schaltung an den Versorgungsanschluss (12) über den Schalter (50) in Abhängigkeit von dem Gleichstromversorgungszustand des elektrischen Systems ($14_1$, ..., $14_n$), wie er in der von dem Steuerungsmodul ($30_1$, ..., $30_n$) übertragenen Informationsmitteilung (N-OK) angegeben ist, zu steuern.

2. Elektrische Baugruppe nach Anspruch 1, die ferner einen Wechselstromabschalter (52) aufweist, der am Ausgang der ersten und zweiten Schaltung (36, 38) elektrisch angeordnet ist.

3. Elektrische Baugruppe nach Anspruch 1 oder 2, bei der die Einrichtung (10) ferner mindestens eine zusätzliche Hilfsvorrichtung ($28_1$, ..., $28_n$) aufweist, die Mittel zum Laden, Speichern und Entladen von elektrischer Energie aufweist und im Nebenschluss zwischen der Gleichstromversorgungsvorrichtung ($26_1$, ..., $26_n$) und dem von dieser Gleichstromversorgungsvorrichtung gespeisten elektrischen System ($14_1$, ..., $14_n$) elektrisch angeschlossen ist, wobei die zusätzliche Hilfsvorrichtung ($28_1$, ..., $28_n$) dazu ausgelegt ist, in einer Entladesituation ein Warnsignal zum Steuerungsmodul ($30_1$, ..., $30_n$) zu senden, wobei dieses Warnsignal zur Definition des Gleichstromversorgungszustands des elektrischen Systems in der Einrichtung beiträgt.

4. Elektrische Baugruppe nach Anspruch 3, bei der das Steuerungsmodul ($30_1$, ..., $30_n$) über einen Bus zur Übertragung digitaler Daten mit der Gleichstromversorgungsvorrichtung ($26_1$, ..., $26_n$), mit der zusätzlichen Hilfsvorrichtung ($28_1$, ..., $28_n$), mit dem elektrischen System ($14_1$, ..., $14_n$) und mit der Steuereinheit (54) verbunden ist, so dass es Informations- und/oder Steuerungsdaten aus und zu dieser Gleichstromversorgungsvorrichtung ($26_1$, ..., $26_n$), dieser zusätzlichen Hilfsvorrichtung ($28_1$, ..., $28_n$), diesem elektrischen System ($14_1$, ..., $14_n$) und dieser Steuereinheit (54) empfängt und sendet.

5. Elektrische Baugruppe nach Anspruch 3 oder 4, bei der die Mittel ($66_1$) zum Speichern von elektrischer Energie der zusätzlichen Hilfsvorrichtung mindestens einen Superkondensator mit elektrochemischer Doppelschicht aufweisen.

6. Elektrische Baugruppe nach Anspruch 5, bei der die Mittel ($66_1$) zum Speichern von elektrischer Energie der zusätzlichen Hilfsvorrichtung mindestens eine Schaltung mit in Reihe geschalteten Superkondensatoren aufweist.

7. Elektrische Baugruppe nach einem der Ansprüche 1 bis 6, bei der die Einrichtung (10) eine Rechenanlage aufweist und das elektrische System ($14_1$, ..., $14_n$) ein Informationsverarbeitungssystem mit mindestens einem Rechner (16) aufweist, das mit einer Gleichspannung von weniger als 120 V von dieser Rechenanlage gespeist wird.

8. Verfahren zur unterbrechungsfreien Versorgung eines elektrischen Versorgungsanschlusses (12) einer Einrichtung (10) mit Wechselstrom, die mindestens ein elektrisches System ($14_1$, ..., $14_n$) aufweist, das mit dem Versorgungsanschluss verbunden ist, wobei das Verfahren die Schritte umfasst, in denen:

- die Einrichtung (10) standardmäßig mittels einer ersten Schaltung (36) für das elektrische Anschließen des Versorgungsanschlusses (12) an ein Wechselstromversorgungsnetz (34) mit Wechselstrom versorgt wird (100),
- die Einrichtung (10) bei einer Funktionsstörung der Standardversorgung (100) mittels einer Hilfsvorrichtung (40), die einen Gleichrichter (42), Mittel (44, 46) zum Laden, Speichern und Entladen von elektrischer Energie und einen Wechselrichter (48) aufweist und zwischen dem Wechselstromversorgungsnetz (34) und dem Versorgungsanschluss (12) der Einrichtung (10) elektrisch angeordnet ist, mit Wechselstrom versorgt wird (112),

wobei die Hilfsvorrichtung (40) in einer zweiten Schaltung (38) zur Wechselstromversorgung angeordnet ist, die im Nebenschluss zur ersten Schaltung (36) an den Versorgungsanschluss (12) angeschlossen ist, wobei das Verfahren ferner einen Schritt zum Schalten (110, 118) zwischen einer Versorgung über die erste Schaltung (36) oder über die zweite Schaltung (38) mit einem von einer Steuereinheit (54) gesteuerten Schalter (50) umfasst, wobei das Verfahren **dadurch gekennzeichnet ist, dass** jedes elektrische System ($14_1$, ..., $14_n$) ein Gleichstromverbraucher ist und über eine Gleichstromversorgungsvorrichtung ($26_1$, ..., $26_n$) mit AC/DC-Umwandlung mit dem Versorgungsanschluss (12) elektrisch verbunden ist, und das Verfahren ferner einen Schritt zur Übertragung einer Informationsmitteilung (N-OK) über einen Gleichstromversorgungszustand des elektrischen Systems ($14_1$, ..., $14_n$) zur Steuereinheit (54) des Schalters (50) mittels eines Steuerungsmoduls ($30_1$, ..., $30_n$) der Einrichtung (10) umfasst und die Steuerung des Schalters (50) durch die Steuereinheit (54) für eine Schaltung zwischen einer Versorgung über die erste (36) oder über die zweite Schaltung (38) in Abhängigkeit von dem Gleichstromversorgungszustand des elektrischen Systems ($14_1$, ..., $14_n$), wie er in der von dem Steuerungsmodul ($30_1$, ..., $30_n$) übertragenen Informationsmitteilung (N-OK) angegeben ist, ausgeführt wird.

## Claims

1. Electrical assembly comprising an installation (10) comprising an alternating current power supply port (12) and at least one electrical system ($14_1$,..., $14_n$), and a device (32) for supplying without interruption the power supply port (12) with alternating current, the uninterruptible power supply device (32) comprising:

   - a first circuit (36) for electrically connecting the power supply port (12) of the installation (10) to an alternating current power supply network (34),
   - a back-up device (40), comprising a rectifier (42), means (44, 46) for charging, storing and discharging electrical energy and an inverter (48), connectable to the power supply port (12) of the installation (10),

   wherein the back-up device (40) is arranged in a second alternating current supply circuit (38) connectable to the power supply port (12) in a by-pass of the first circuit (36), the uninterruptible power supply device (32) comprising a switch (50) arranged and commanded by a controller (54) to connect selectively the first (36) or the second (38) circuit to the power supply port (12), **characterized in that**:

   - each electrical system ($14_1$,..., $14_n$) of the installation (10) consumes direct current and is electrically connected to the power supply port (12) through a direct current power supply device ($26_1$,..., $26_n$), with AC/DC conversion,
   - the installation (10) comprises at least one module ($30_1$,..., $30_n$) for managing the direct current power supply of the electrical system ($14_1$,..., $14_n$) by the direct current power supply device ($26_1$,..., $26_n$) with AC/DC conversion, this management module ($30_1$,..., $30_n$) being designated to transmit an information message (N-OK) on the state of the direct current power supply of the electrical system ($14_1$,..., $14_n$) to a controller (54) of the switch (50), and
   - the controller (54) is designed to command the selective connection, by the switch (54) of the first (36) or the second (38) circuit to the power supply port (12) as a function of the state of the supply with direct current of the electrical system ($14_1$,...,$14_n$) as indicated in the information message (N-OK) transmitted by the management module ($30_1$,..., $30_n$).

2. Electrical assembly according to claim 1, further comprising an alternating current circuit breaker (52) arranged electrically at the output of the first and second circuits (36, 38).

3. Electrical assembly according to claim 1 or 2, wherein the installation (10) further comprises at least one additional back up device ($28_1$,..., $28_n$), comprising means for charging, storing and discharging electrical energy, electrically by-pass connected between the direct current power supply device ($26_1$,..., $26_n$) and the electrical system ($14_1$,..., $14_n$) supplied by said direct current power supply device, the additional back up device ($28_1$,..., $28_n$) being designed to transmit a warning signal in a situation of discharge to the management module ($30_1$,..., $30_n$), said warning signal participating in the definition of the state of the direct current power supply of the electrical system in the installation.

4. Electrical assembly according to claim 3, wherein the management module ($30_1$,..., $30_n$) is connected, by means of a numerical data transmission bus, to the direct current power supply device ($26_1$,..., $26_n$), to the additional back up device ($28_1$,..., $28_n$), to the electrical system ($14_1$,..., $14_n$) and to the controller (54) so as to receive and transmit information and/or command data from and to said direct current power supply device ($26_1$,..., $26_n$), said additional back up device ($28_1$,..., $28_n$), said electrical system ($14_1$,..., $14_n$) and said controller (54).

**5.** Electrical assembly according to claim 3 or 4, wherein the electrical energy storage means ($66_1$) of the additional back up device comprise at least one electrochemical double layer supercapacitor.

**6.** Electrical assembly according to claim 5, wherein the electrical energy storage means ($66_1$) of the additional back up device comprise at least one circuit of supercapacitors arranged in series.

**7.** Electrical assembly according to any one of claims 1 to 6, wherein the installation (10) comprises a computing centre and the electrical system ($14_1$,..., $14_n$) comprises an information processing system with at least one computer (16) supplied with direct current voltage less than 120V of said computer centre.

**8.** Method of supplying without interruption an electrical supply port (12) of an installation (10) with alternating current comprising at least one electrical system ($14_1$,...,$14_n$) connected to the power supply port, comprising the steps consisting in:

- supplying (100) the installation (10) with alternating current by default by means of a first circuit (36) for electrically connecting the power supply port (12) to an alternating current power supply network (34),
- supplying (112) the installation (10) with alternating current by means of a back-up device (40), comprising a rectifier (42), means (44, 46) for charging, storing and discharging electrical energy and an inverter (48), electrically arranged between the alternating current power supply network (34) and the power supply port (12) of the installation (10), in the event of malfunction of the power supply by default (100),

wherein the back-up device (40) is arranged in a second alternating current power supply circuit (38) connected to the power supply port (12) in a by-pass of the first circuit (36), the method further comprising a step of commutation (110, 118) by a switch (50) commanded by a controller (54), between a power supply by the first (36) or the second (38) circuit, the method being **characterized in that**, each electrical system ($14_1$,..., $14_n$) consuming direct current and being electrically connected to the power supply port (12) through a direct current power supply device ($26_1$,..., $26_n$) with AC/DC conversion, it further comprises a step of transmitting, by a management module ($30_1$,..., $30_n$) of the installation (10), an information message (N-OK) on the state of a direct current power supply of the electrical system ($14_1$,..., $14_n$) to a controller (54) of the switch (50), and **in that** the command of the switch (50) by the controller (54) for a commutation between a power supply by the first (36) or the second (38) circuit is executed as a function of the state of direct current power supply of the electrical system ($14_1$,..., $14_n$) as indicated in the information message (N-OK) transmitted by the management module ($30_1$,..., $30_n$).

# Figure 1

## Figure 2

## Figure 3

**RÉFÉRENCES CITÉES DANS LA DESCRIPTION**

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Littérature non-brevet citée dans la description**

*   **SUKUMARA et al.** Fuel cell based uninterrupted power sources. *International Conference on Power Electronics and Drive Systems Proceedings,* 26 Mai 1997, vol. 2, 728-733